# EUROPÄISCHE PATENTSCHRIFT

(11) **EP 1 183 202 B1**
(45) Veröffentlichungstag und Bekanntmachung des Hinweises auf die Patenterteilung: **28.05.2003**
(21) Anmeldenummer: 99927900.3
(22) Anmeldetag: 07.06.1999
(51) Int. Cl.: B65G 61/00

(54) **FLURFÖRDERZEUG**
INDUSTRIAL TRUCK
CHARIOT DE MANUTENTION

(43) Veröffentlichungstag der Anmeldung: 06.03.2002
(73) Patentinhaber: Saxer, Robert, 85307 Paunzhausen (DE); Schinkinger, Wilhelm, 82152 Krailling (DE)
(72) Erfinder: Saxer, Robert, 85307 Paunzhausen (DE); Schinkinger, Wilhelm, 82152 Krailling (DE)
(74) Vertreter: Winter, Brandl & Partner
(86) Internationale Anmeldenummer: EP9903916
(87) Internationale Veröffentlichungsnummer: WO00075058

(56) Entgegenhaltungen:
- EP-A- 0 045 553
- US-A- 3 861 535
- US-A- 4 101 040

## Beschreibung

### Technisches Gebiet

Die Erfindung betrifft im allgemeinen ein Flurförderzeug mit einem Antriebsteil und einem Lastteil zur Handhabung von bepackten oder unbepackten Paletten, gemäß dem Oberbegriff des Patentanspruchs 1, und insbesondere ein Flurförderzeug zur Handhabung von Paletten eines bestimmten Formats, wie sie z.B. in Kommissionierbereichen und Stückgutspeditionen verwendet werden.

### Stand der Technik

Ein derartiges Flurförderzeuge ist aus dem US Patent Nr. 4,101,040 bekannt. Der Lastteil hat zwei in Fahrt- bzw. Längsrichtung des Flurförderzeugs orientierte, vertikal anhebbare Lastarme in Form von Gabelzinken mit denen Lasten wie Paletten oder palettierte Waren gehandhabt werden können. Die Bezeichnung "Handhabung" umfaßt Tätigkeiten wie die Aufnahme, den Transport und das Absetzen einer Palette, einer palettierten Ware oder eines Palettenstapels. Weitere Beispiele für derartige Flurförderzeuge sind herkömmliche Handgabelhubwagen, Elektrohubwagen, radunterstützte Stapler, Gegengewichtsstapler oder Schubmaststapler. Zur Aufnahme einer Palette oder einer palettierten Ware ist die Palette im besonderen mit geeigneten Aussparungen für einen Eingriff der Gabelzinken des Flurförderzeugs beispielsweise eines Staplers versehen.

In Stückgutspeditionen und Kommissionierbereichen von Betrieben werden überwiegend aus Holz gefertigte Paletten eines bestimmten Formats, insbesondere sogenannte Euro-Paletten mit einer Länge von 1200 mm, einer Breite von 800 mm, einer Höhe von 150 mm und einem Gewicht von etwa 20 bis 30 kg verwendet. In derartigen Betrieben bleibt nach der Zusammenstellung von Ausrolltouren oftmals eine nicht unerhebliche Anzahl von nicht benötigten Leerpaletten am Boden liegen, die bislang entweder von Hand oder mittels eines der vorstehend genannten handelsüblichen Flurförderzeuge zu transport- und verladefähigen Palettenstapeln von beispielsweise 15 bis 17 Paletten (entsprechend der Innenhöhe eines LKW) gestapelt werden müssen. Die Erstellung eines Palettenstapels von Hand ist mit körperlich hohen Anstrengungen verbunden. Aus diesem Grund werden die Leerpaletten daher üblicherweise mittels eines der vorstehend genannten Flurförderzeuge gehandhabt.

Jedoch erweist sich die Verwendung der herkömmlichen Flurförderzeuge zur Handhabung von Leerpaletten als äußerst unwirtschaftlich, da die für diese Aufgabe anfallenden Tätigkeiten nur unter einem hohen Zeitaufwand bewältigt werden können und dadurch bedingt hohe Personalkosten zur Folge haben. Um beispielsweise mehrere auf dem Boden umherliegende Leerpaletten mittels eines der vorstehend genannten Flurförderzeuge zu einem Palettenstapel aufzurichten, wird zunächst eine erste Leerpalette angesteuert und unterfahren, um die Gabelzinken des Flurförderzeugs unter der ersten Palette zu plazieren. Anschließend wird die erste Palette durch eine Vertikalbewegung der Gabelzinken in eine bestimmte Höhe angehoben. In diesem Zustand wird mit dem Flurförderzeug eine zweite Palette angesteuert, und zwar so, daß die erste Palette im wesentlichen nach der zweiten Palette ausgerichtet wird. Dann wird die erste Palette auf der zweiten Palette abgesetzt. Zu diesem Zeitpunkt stehen die Gabelzinken noch in Eingriff mit der ersten Palette. Um eine dritte Palette auf den mittlerweile aus der ersten und zweiten Palette bestehenden Palettenstapel oder diesen Palettenstapel auf einer dritten Palette zu plazieren, muß das Flurförderzeug daher zunächst so in Bewegung gesetzt werden, daß die Gabelzinken aus der ersten Palette ausfahren. Anschließend werden die Gabelzinken abgesenkt. Nun kann die auf dem Boden befindliche zweite Palette oder die dritte Palette unterfahren und angehoben werden. Im Anschluß daran können die vorstehend genannten Schritte wiederholt werden.

Ohne weitere Worte darüber zu verlieren, ist es ersichtlich, daß das Erstellen eines beispielsweise aus 15 bis 17 Leerpaletten bestehenden Palettenstapels insbesondere aufgrund der in Fahrt- bzw. Längsrichtung ragenden Gabelzinken ein ständiges Hin- und Herrangieren des Flurförderzeugs erfordert, um die Gabelzinken aus einer höherliegenden Palette in eine tieferliegende Palette oder umgekehrt zu versetzen. Dies ist sehr zeitaufwendig und dementsprechend mit hohen Personalkosten verbunden. Dasselbe gilt für das Abstapeln von bereits zu einem Stapel aufgerichteten Leerpaletten, was prinzipiell in umgekehrter Reihenfolge wie das Stapeln der Leerpaletten erfolgt.

Um eine reibungsfreie Handhabung bei der Palettenlagerung in Hochregalen oder bei der automatisierten Palettenbepackung zu gewährleisten, dürfen die Paletten ferner keine Beschädigungen, wie z.B. Absplitterungen, fehlende Holzteile etc., aufweisen, da beschädigte Paletten nicht oder nur eingeschränkt förderbar und wegen der u.U. nicht mehr gegebenen statischen Tragfähigkeit nicht mehr hochregalfähig sind. Stark beschädigte Paletten können daher nicht mehr verwendet werden. Um die Anschaffungskosten für neue Paletten gering zu halten, wird folglich großer Wert auf eine hohe Palettenqualität gelegt. Aus diesem Grund benötigt die Person, die mit dem Umgang handelsüblicher Flurförderzeuge oder generell mit der Handhabung von Leerpaletten betraut ist, eine gewisse Übung, um den Paletten beispielsweise beim Unterfahren mit einem Stapler mit dessen Gabelzinken keine Beschädigung zuzuführen und die zu lösende Aufgabe unter einem vertretbaren Zeitaufwand zu bewältigen.

Damit ein aus 15 bis 17 Leerpaletten gebildeter Palettenstapel ferner die erforderliche Stabilität gegen ein seitliches Umkippen besitzt und möglichst raumsparend zwischengelagert oder auf einem LKW verladen werden kann, muß die jeweils obenliegende Palette des Palettenstapels exakt nach der jeweils darunterliegenden Palette ausgerichtet sein. Auch dies setzt wiederum eine gewisse Erfahrung im Umgang mit dem Flurförderzeug voraus. Der für eine sichere Handhabung von Paletten mittels handelsüblichen Flurförderzeugen geeignete Personenkreis ist daher auf speziell ausgebildetes Personal beschränkt.

Weitere Flurförderzeuge sind aus der Europäischen Patentanmeldung Nr. EP 0 045 553 Al und dem US Patent Nr. 3,861,535 bekannt. Die EP 0 045 553 Al beschreibt im Besonderen eine Vorrichtung zur Handhabung mehrerer in Reihe angeordneten Kasten bzw. mehrerer in Reihe angeordneter Kastenstapeln mittels zwei einander gegenüber angeordneten, horizontal aufeinander zu bewegbaren Klemmplatten. Die US 3,861,535 offenbart einen Gabelhubwagen mit einem Hubgabelmechanismus und einer Tragevorrichtung, welche mittels des Hubgabelmechanismus aufgenommene und in eine bestimmte Höhe gehobene Paletten oder Palettenkisten in dieser bestimmten Höhe hält.

### Darstellung der Erfindung

Ausgehend von einem Flurförderzeug, wie es aus der US 4,101,040 bekannt ist, hat die Erfindung die Aufgabe, ein für eine einfache und wirtschaftliche Handhabung insbesondere von Paletten eines bestimmten Formats konzipiertes Flurförderzeug zu schaffen, das jedoch auch die Aufnahme und den Transport palettierter Lasten erlaubt.

Diese Aufgabe wird durch das Flurförderzeug gemäß den Merkmalen des Patentanspruchs 1 gelöst.

Das erfindungsgemäße Flurförderzeug weist im besonderen wie bei einem herkömmlichen Flurförderzeug einen Antriebsteil und einen Lastteil auf. Der Lastteil umfaßt zwei in Längsrichtung des Flurförderzeugs orientierte Lastarme zur Aufnahme einer Palette, die bepackt oder unbepackt sein kann. Bei den herkömmlichen Flurförderzeugen sind die Lastarme, wie eingangs erwähnt, üblicherweise als Gabelzinken ausgeführt, die durch eine Vorwärtsfahrt des Flurförderzeugs formschlüssig Eingriff mit an der Palette vorgesehenen Aussparungen in Eingriff gebracht werden. Die Lastarme sind daher dem Abstand zwischen den Aussparungen entsprechend angeordnet, d.h. in einem Abstand, der kleiner ist als das Maß der aufzunehmenden Palette in Querrichtung des Flurförderzeugs. Im Gegensatz dazu sind die Lastarme bei dem erfindungsgemäßen Flurförderzeug, in Fahrt- bzw. Längsrichtung des Flurförderzeugs betrachtet, jeweils auf verschiedenen Seiten der aufzunehmenden Palette angeordnet, d.h. in einem Abstand, der größer ist als das Maß der aufzunehmenden Palette in Querrrichtung, und weisen jeweils eine Vielzahl von in Längsrichtung beabstandeten, zur Palette hin ausrichtbaren Palettenaufnehmern auf, die durch eine Bewegung quer zur Längsrichtung in oder außer Eingriff mit der Palette, im besonderen mit an der Palette vorgesehenen Aussparungen, bringbar sind. Diese Bewegung quer zur Längsrichtung kann durch eine ausschließliche Bewegung der Lastarme erfolgen. Ebenso ist aber auch eine Bewegung der an den Lastarmen vorgesehenen Palettenaufnehmern oder eine kombinierte Bewegung der Lastarme und der Palettenaufnehmern möglich. Des weiteren kann die Bewegung der Palettenaufnehmer aus reinen Horizontal- und einer reinen Vertikalbewegung bestehen, die jeweils quer zur Fahrt- bzw. Längsrichtung des Flurförderzeugs erfolgen. Die Bewegung der Palettenaufnehmer kann jedoch auch über eine Kreisbewegung der Palettenaufnehmer erzielt werden, die sich in eine Horizontal- und eine Vertikalbewegungskomponente quer zur Längsrichtung zerlegen läßt.

Da die Aufnahme der Palette, in Fahrt- bzw. Längsrichtung des Flurförderzeugs betrachtet, erfindungsgemäß durch einen Eingriff zu beiden Seiten der Palette erfolgt, läßt sich vorteilhafterweise die Eingriffslänge der Palettenaufnehmer, die, wie bei herkömmlichen Flurförderzeugen, beispielsweise als Gabelzinken ausgestaltet sein können, erheblich verkürzen. Bei den herkömmlichen Flurförderzeugen müssen die Gabelzinken mindestens so lange sein, daß sie sich über den Schwerpunkt der aufzunehmenden Palette hinaus erstrecken, damit die Palette beim Anheben vom Boden nicht nach vorne überkippt. Diese relativ große Länge der Gabelzinken erhöht das Risiko, die Palette beim Unterfahren mit den Gabelzinken zu beschädigen. Durch das erfindungsgemäße Flurförderzeug wird dieses Risiko jedoch erheblich reduziert.

Da die Palettenaufnehmer durch eine Bewegung quer zur Fahrt- bzw. Längsrichtung des Flurförderzeugs in oder außer Eingriff mit der Palette gebracht werden können, lassen sich die Palettenaufnehmer in Vertikalrichtung des Flurförderzeugs ohne ein ständiges Hin- und Herrangieren realisieren. Dies trägt zu einer erheblich schnelleren und einfacheren Handhabung der Paletten, d.h. ermöglicht das Erstellen eines Palettenstapels oder das palettenweise Abstapeln eines bereits vorhandenen Palettenstapels in vergleichsweise kurzer Zeit. Daher erlaubt das erfindungsgemäße Flurförderzeug eine wirtschaftliche Handhabung insbesondere von Leerpaletten.

Wie vorstehend dargelegt, läßt sich durch das erfindungsgemäße Flurförderzeug somit der Zeitaufwand im Zusammenhang mit bei der Handhabung von Leerpaletten anfallenden Tätigkeiten erheblich reduzieren. Dies wiederum bedeutet eine beträchtliche Personal- und Personalkosteneinsparung. Daher kann beispielsweise eine Stückgutspedition, die einen täglichen Umschlag von ca. 300 bis 400 Leerpaletten und mehr zu bewerkstelligen hat, eine humanere Arbeitsplatzgestaltung gewährleisten. Da ferner in großem Umfang auf Bauteile herkömmlicher Flurförderzeuge zurückgegriffen werden kann, sind die Fertigungs- bzw. Anschaffungskosten für das erfindungsgemäße Flurförderzeug nicht höher als für einen herkömmlichen Elektro-Deichselgabelhubwagen ("Ameise").

Das erfindungsgemäße Flurförderzeug läßt sich dementsprechend als eigenständiges Gerät oder in Form eines Sonderanbaugeräts für einen radunterstützten Stapler, Gegengewichtsstapler, oder Schubmaststapler realisieren.

Wenngleich das erfindungsgemäße Flurförderzeug speziell für die Handhabung von Leerpaletten eines bestimmten Formats, insbesondere von sogenannten Euro-Paletten, konzipiert ist, kann es prinzipiell auch zum Transport einer beliebigen Palette, einer palettierten Last oder eines Palettenstapels eingesetzt werden.

Erfindungsgemäße Weiterentwicklungen und Ausführungsformen sind Gegenstand der Unteransprüche.

Damit eine auf dem Boden liegende Leerpalette aufgenommen und angehoben werden kann, müssen die Lastarme je nach Format der aufzunehmenden Palette in einem bestimmten Abstand zum Boden sowie in einem bestimmten Abstand zueinander justierbar bzw. einstellbar sein. Um den Einsatz des erfindungsgemäßen Flurförderzeugs nicht auf ein bestimmtes Palettenformat zu beschränken, sind die die Palettenaufnehmer tragenden Lastarme daher vorteilhafterweise horizontal und vertikal verstellbar.

Ungeachtet dessen können die Lastarme, wie im Fall eines Gegengewichtstaplers, eines radunterstützten Staplers oder eines Schubmaststaplers, an einem vertikal bewegbaren Lastschlitten vorgesehen sein, der entlang eines dem Lastteil zugeordneten Hubmasts auf- und abbewegbar ist, oder, wie im Fall eines Handgabelhubwagens, eines Elektro-Handhubwagens oder eines Elektro-Deichsel-Gabelhubwagens, Radarme des Lastteils bilden, die sich über Lastrollen auf dem Boden abstützen, wobei der Lastteil pneumatisch, hydraulisch oder mechanisch relativ zum Antriebsteil angehoben werden kann. Darüber hinaus können die Lastarme in Querrichtung des Flurförderzeugs verstellbar sein. Diese Maßnahmen tragen wesentlich zu einer hohen Flexibilität und damit zu einem breitgefächerten Anwendungsgebiet des erfindungsgemäßen Flurförderzeugs bei.

Um bei der Aufnahme der Paletten die Gefahr einer Beschädigung möglichst gering zu halten, weisen die Palettenaufnehmer ferner an ihrem zur Palette hin orientierten Ende vorzugsweise eine drehbar gelagerte Kontaktrolle auf, die beim Eingriff des Palettenaufnehmers in die Palette diese kontaktiert. Eine Relativbewegung zwischen den Palettenaufnehmern und den Paletten erfolgt somit durch eine Abrollbewegung der Palettenaufnehmer an der Palette. Dadurch werden einerseits die bei einer Relativbewegung auftretenden Reibkräfte erheblich reduziert; andererseits wird die Wahrscheinlichkeit einer durch einen Stoßkontakt verursachten Beschädigung im Vergleich zu spitzen Gabelzinken verringert.

Derartige Beschädigungen lassen sich noch mehr einschränken, wenn wenigstens der Außenumfangsbereich der Kontaktrolle aus einem elastischen und damit stoßdämpfenden Material gebildet ist. Ein weiterer Vorteil dieser Ausgestaltung der Kontaktrolle ist darin zu sehen, daß insbesondere bei einem aus einer großen Anzahl von Paletten bestehenden Palettenstapel mit einem hohen Gewicht die Auflagefläche der unmittelbar auf den Kontaktrollen aufliegenden untersten Palette aufgrund der Nachgiebigkeit des elastischen Materials gegenüber dem Palettenmaterial vergrößert wird, wodurch die Kontaktrollen weniger stark in das Palettenmaterial eindrücken.

Um eine reibungsfreie Handhabung der Paletten auch einem weniger geschickten Personenkreis zu ermöglichen, ist es ferner von Vorteil, wenn das erfindungsgemäße Flurförderzeug eine Zufuhreinrichtung aufweist, die es ermöglicht, daß beispielsweise eine auf dem Boden liegende Leerpalette während des Fahrbetriebs des Flurförderzeugs zwischen die beiden Lastarme mit den Palettenaufnehmern geführt und plaziert werden kann, indem die aufzunehmende Palette mit dem Flurförderzeug einfach "überfahren", d.h. eingesammelt, wird. Diesbezüglich ist es besonders vorteilhaft, wenn sich diese Zufuhreinrichtung über den Lastteil und den Antriebsteil des erfindungsgemäßen Flurförderzeugs hinweg erstreckt, wodurch das Einsammeln einer beispielsweise auf dem Boden liegenden Palette nicht auf die Vorwärtsfahrt des Flurförderzeugs beschränkt ist, sondern auch während der Rückwärtsfahrt möglich ist.

Diese Zufuhreinrichtung umfaßt vorzugsweise den Lastarmen zugeordnete, in Längsrichtung des Flurförderzeugs ausgerichtete Führungsschienen, deren Abstand zueinander, in Fahrtrichtung des Flurförderzeugs betrachtet, zur Front- und Heckseite des Flurförderzeugs hin zunimmt. Durch diese Zufuhreinrichtung können auf dem Boden herum liegende Paletten mittels des Flurförderzeugs einfach "überfahren" bzw. eingesammelt werden. Die Führungsschienen können wiederum jeweils mit einer Vielzahl von in Fahrt- bzw. Längsrichtung des Flurförderzeugs beabstandet angeordnete Führungsrollen aufweisen, die die beim Überfahren und Einsammeln der Paletten auftretenden Reibkräfte zwischen den Führungsschienen der Zufuhreinrichtung und den Paletten minimieren.

Eine weitere Erleicherung beim Einsammeln von Paletten ergibt sich, wenn die Zufuhreinrichtung eine vorzugsweise an den Führungsschienen vorgesehene Arretiereinrichtung aufweist, die eine lösbare Arretierung der aufzunehmenden Palette in einer vorbestimmten Aufnahmeposition zwischen den beiden Lastarmen ermöglicht. In diesem Fall muß das Flurförderzeug nach dem Überfahren einer Palette zu deren Aufnahme, d.h. zum Greifen und Anheben, nicht angehalten werden. Die aufzunehmende Palette wird vielmehr, da sie in der vorbestimmte Aufnahmeposition zwischen den beiden Lastarmen festgehalten wird, bis zu ihrer Wegnahme vom Boden ein kurzes Stück in Fahrtrichtung des Flurförderzeugs hergeschoben. Durch eine entsprechende Abstimmung der Fahrgeschwindigkeit des Flurförderzeugs auf die Geschwindigkeit, mit der die Palette durch die beiden Lastarme aufgenommen, d.h. ergriffen und angehoben wird, läßt sich in diesem Fall, die Distanz minimieren, über die die Palette auf dem Boden liegend geschoben wird.

Ist neben der Arretiereinrichtung zusätzlich ein Aufnahmepositionssensor vorgesehen, der erfaßt, ob die Palette die vorbestimmte Aufnahmeposition eingenommen hat und dies durch die Abgabe eines entsprechenden elektrischen Signals anzeigt, kann der Bediener des Flurförderzeugs in Abhängigkeit von dem elektrischen Signal durch eine Ansteuerung der Lastarme und/oder der Palettenaufnehmer über vorzugsweise eine an den Aufnahmepositionssensor gekoppelte Steuereinrichtung die Aufnahme der Palette bewirken. Vorteilhaft ist hierbei natürlich, wenn die Steuereinrichtung die Ansteuerung der Lastarme und/oder der Palettenaufnehmer in Abhängigkeit vom elektrischen Signal automatisch ansteuert, da in diesem Fall der Bediener des Flurförderzeugs nur mehr darauf achten muß, die einzusammelnden Paletten auf möglichst kurzem Weg zu überfahren. Auch die palettenweise Verteilung der auf einem bereits zu einem Stapel aufgerichteten Paletten auf dem Boden gestaltet sich durch die Steuereinrichtung als besonders einfach.

Eine bevorzugte Ausführungsform des erfindungsgemäßen Flurförderzeugs besteht darin, daß die Lastarme jeweils eine drehbar gelagerte Walze, deren Drehachse in Längsrichtung ausgerichtet ist, umfassen bzw. walzenartig ausgestaltet sind, wobei sich die Palettenaufnehmer vorzugsweise tangential über den Außenumfang der jeweiligen Walze hinaus erstrecken. Durch eine synchrone, gegenläufige Drehbewegung der beiden Walzen in eine jeweils bestimmte Drehrichtung können die Palettenaufnehmer mit der aufzunehmenden Palette so in Eingriff gebracht werden, daß die untergriffene Palette schon allein durch die weitere Drehbewegung der Walzen bis in eine bestimmte Höhe angehoben wird. Eine weitere Drehbewegung der Lastarme hätte zur Folge, daß die Palettenaufnehmer außer Eingriff mit der angehobenen Palette gerät, wodurch diese zu Boden fallen würde.

Sind die Palettenaufnehmer mit der Palette einmal in Eingriff gebracht, ließe sich die Anhebung der Palette jedoch auch durch eine Vertikalbewegung der Lastarme realisieren bzw. die Anhebung der Palette durch eine Drehbewegung der Lastarme in Verbindung mit einer Vertikalbewegung erzielen. Die Walzen müssen gegenüber dem Boden und der aufzunehmenden Palette natürlich so positioniert sein bzw. durch eine Horizontal- und Vertikalverstellung der Lastarme und/oder der Palettenaufnehmer quer zur Fahrt- bzw. Längsrichtung verstellt werden, daß bei einer Drehbewegung der Walzen die Palettenaufnehmer einerseits nicht den Boden berühren und andererseits mit der aufzunehmenden Palette in und außer Eingriff gebracht werden können. Hierbei muß der Durchmesser des von den Enden der jeweiligen Palettenaufnehmer bei einer Drehbewegung der Walzen beschriebenen Kreises auch auf das jeweilige Palettenformat abgestimmt sein bzw. werden.

Im Hinblick auf eine möglichst rationelle Handhabung von Leerpaletten insbesondere im Hinblick auf die Abstapelung eines bereits vorhandenen Palettenstapels ist von Vorteil, wenn die Walzen jeweils eine Vielzahl von in Umfangsrichtung der Walzen gleichmäßig beabstandeten Palettenaufnehmern aufweisen. In diesem Fall kann, natürlich nur bei einer entsprechenden Abstimmung der Walzen und/oder der Palettenaufnehmer auf den Abstand zum Boden und auf das Palettenformat der aufzunehmenden Palette, durch eine synchrone, gegenläufige Hin- und Herdrehbewegung der Walzen in die jeweils bestimmten Drehrichtungen in relativ kurzer Zeit ein Palettenstapel aus einer beliebigen Anzahl von Paletten erstellt werden bzw. ein bereits vorhandener Palettenstapel abgestapelt werden.

Das Erstellen eines Palettenstapels mittels des erfindungsgemäßen Flurförderzeugs läßt sich beispielsweise realisieren, indem einzelne auf dem Boden herumliegende Leerpaletten durch das erfindungsgemäße Flurförderzeug in der Weise "überfahren" werden, daß sie durch die vorstehend erwähnte Zufuhreinrichtung zwischen die beiden Lastarme plaziert werden. Nach Erreichen der vorbestimmten Aufnahmeposition zwischen den beiden Lastarmen des Flurförderzeugs in der die eingesammelte Palette durch die Arretiereinrichtung festgehalten wird, und zwar auch dann, wenn die Fahrt fortgesetzt wird, und welche durch den Aufnahmepositionssensor erkannt wird, werden die Walzen vorzugsweise automatisch angesteuert und in eine geeignete Drehbewegung versetzt. Dabei greifen die Palettenaufnehmer in die eingesammelte Palette und nehmen die Palette im Verlauf der weiteren Drehbewegung der Walzen nach oben mit. Sobald diese Palette eine Höhe erreicht hat, die ausreicht, um eine weitere Palette unter der angehobenen Palette zu plazieren, wird die Drehbewegung der Walze angehalten. Unmittelbar nach diesem Vorgang kann die nächste Palette überfahren und eingesammelt werden. Erst nachdem wieder erkannt wurde, daß die eingesammelte Palette zwischen den Lastarmen in der vorbestimmten Aufnahmeposition plaziert ist, werden die Lastarme in eine Drehbewegung in die entgegengesetzte Drehrichtung versetzt, wodurch die erste Palette auf der darunterliegenden eingesammelten Palette abgesetzt wird. Eine ungehinderte Drehbewegung der Walzen in die entgegengesetzte Drehrichtung ist jedoch nur dann möglich, wenn die Palettenaufnehmer, in Querrichtung betrachtet, außer Eingriff mit der höher liegenden Palette gebracht werden. Hierzu müssen die Palettenaufnehmer eine Horizontalbewegung quer zur Längsrichtung ausführen können, durch die sie von der Palette weg geführt werden. Dies kann dadurch erzielt werden, daß die Palettenaufnehmer derart flügelartig an der jeweiligen Walze angelenkt sind, daß sie unter der Wirkung einer Vorspannkraft die vorstehend erwähnte Tangentialstellung einnehmen und gegen die Vorspannkraft in eine Umfangsstellung schwenkbar sind, in der sie im wesentlichen in Umfangsrichtung der Walze ausgerichtet sind. Die Horizontalbewegung der Palettenaufnehmer ließe sich generell jedoch auch erzielen, wenn die Palettenaufnehmer starr an den Lastarmen angebracht sind und die Lastarme horizontal quer zur Längsrichtung verstellt werden.

Die flügelartige Anlenkung der Palettenaufnehmer an die Lastarme ist insbesondere zum Abstapeln von bereits zu einem Stapel aufgerichten Leerpaletten von Vorteil. Zum Abstapeln nimmt das erfindungsgemäße Flurförderzeug zunächst einen Stapel von Leerpaletten auf, indem es die Walzen in der Weise ansteuert, daß die Palettenaufnehmer durch eine Drehbewegung der Walzen in eine jeweils bestimmte Drehrichtung mit der untersten Palette des Palettenstapels in Eingriff gebracht werden, und der Palettenstapel angehoben wird. Nach dem Transport des Palettenstapels an eine gewünschte Stelle, werden die Walzen in der Weise angesteuert, daß diese eine Drehbewegung in die entgegengesetzte Drehrichtung ausführen, wodurch zunächst der gesamte Palettenstapel auf dem Boden abgesetzt wird. Die Drehbewegung der Walzen wird daraufhin so lange fortgesetzt, bis die Palettenaufnehmer oder, im Fall mehrerer um den Umfang der Walzen verteilter Palettenaufnehmer, die nächsten Palettenaufnehmer in die in zweiter Reihe liegende Palette vom Boden aus betrachtet eingreifen. Da die Palettenaufnehmer an der Walze, wie vorstehend beschrieben, angelenkt sind, können sie, wenn sie während dieser fortgesetzten Drehbewegung der Walzen jeweils von oben gegen den Palettenstapel stoßen, zur Walze hin schwenken und am Palettenstapel entlang unter die in zweiter Reihe liegende Palette gleiten. Bei starr an den Walzen angebrachten Palettenaufnehmer müssen die Lastarme und/oder die Palettenaufnehmer natürlich eine Horizontalbewegung quer zur Längsrichtung ausführen. Nun werden die Walzen wieder so angesteuert, daß sie erneut eine Drehbewegung in erstere Drehrichtung ausführen, um den Palettenstapel ab der zweiten Palette, vom Boden aus betrachtet, anzuheben, wodurch die unterste Palette freigegeben wird und verlassen werden kann.

Die Erstellung eines Palettenstapels bzw. die Abstaplung einzelner Paletten von einem bereits vorhandenen Palettenstapel ließe sich jedoch auch anders realisieren. Beispielsweise könnten die Lastarme anstelle der vorstehend beschriebenen Walzen jeweils eine Vielzahl von in Längsrichtung beabstandeten, vertikal ausgerichteten Fördereinrichtungen mit einem Fördermittel, wie z.B. einem Förderband oder einer Förderkette, aufweisen, an dem die jeweiligen Palettenaufnehmer angebracht sind. In diesem Fall sind die jeweiligen Fördermittel synchron gegenläufig ansteuerbar. Die Palettenaufnehmer sind an dem jweiligen Fördermittel zur Palette hin, vorzugsweise normal, ausgerichtet. Auch hierbei wäre es von Vorteil, wenn die Fördermittel jeweils eine Vielzahl von in Laufrichtung des jeweligen Fördermittels gleichmäßig beabstandeten Palettenaufnehmern aufweisen, und/oder die Palettenaufnehmer, wie bei der Walze, in der Weise flügelartig an dem jeweiligen Fördermittel angelenkt sind, daß sie unter der Wirkung einer Vorspannkraft die Normalstellung einnehmen und gegen die Vorspannkraft in eine Parallelstellung schwenkbar sind, in sie im wesentlichen parallel zum Fördermittel ausgerichtet sind.

Das erfindungsgemäße Flurförderzeug ist insbesondere zur Handhabung von Leerpaletten von einem bestimmten Format, beispielsweise sogenannte Euro-Paletten, konzipiert. Daher hat das Flurförderzeug vorzugsweise eine an das Format der Palette angepaßte Aufnahmeeinrichtung, die über den Lastarmen plaziert ist und eine geführte Aufnahme von Leerpaletten in Vertikalrichtung des Flurförderzeugs ermöglicht. Dadurch wird einerseits Gefahr eines Umkippens eines aus mehreren Paletten gebildeten Palettenstapels beseitigt. Andererseits wird eine exakte Ausrichtung der Paletten übereinander ermöglicht.

In einer vorteilhaften Weiterbildung umfaßt die Aufnahmeeinrichtung eine Arretiereinrichtung, beispielsweise eine oder mehrere federvorgespannte Schwenkhaken, der bzw. die eine lösbare Arretierung der im Führungskorb aufgenommene(n) Leerpalette(n) in einer bestimmten Höhe ermöglicht bzw. ermöglichen. Diese Weiterbildung erleichtert sowohl die Erstellung als auch die Abstapelung eines Palettenstapels, da es die Möglichkeit schafft, den Palettenstapel ab einer beliebigen Palette, beispielsweise der zweiten Palette von unten, über die Arretiervorrichtung festzuhalten, während die unterste Palette über den Eingriff der Palettenaufnehmer und die entsprechende Ansteuerung der Lastarme auf dem Boden abgestellt werden kann. Anschließend kann der von der Arretiervorrichtung festgehaltene Palettenstapel wieder von den Lastarmen übernommen und vorstehend beschriebene Vorgang erneut eingeleitet werden.

### Kurze Beschreibung der Zeichnungen

Figur 1 zeigt eine schematische Seitenansicht einer bevorzugten Ausführungsform des erfindungsgemäßen Flurförderzeugs.
Figur 2 zeigt eine schematische Schnittansicht entlang der Linie II-II in Figur 1.
Figur 3 zeigt eine schematische Schnittansicht entlang der Linie III-III in Figur 2.
Figur 4 zeigt eine schematische Draufsicht auf die bevorzugte Ausführungsform des erfindungsgemäßen Flurförderzeugs, wobei der Einfachheit halber ein über den Lastarmen angeordneter Aufnahmekorb weggelassen ist.
Figur 5 zeigt eine schematische Perspektivansicht der bevorzugten Ausführungsform des erfindungsgemäßen Flurförderzeugs, wobei der Einfachheit halber ein über den Lastarmen angeordneter Aufnahmekorb weggelassen ist.

Die Figuren 6a bis 6d veranschaulichen die Funktionsweise des erfindungsgemäßen Flurförderzeugs bei der Erstellung eines Palettenstapels.

Die Figuren 7a bis 7d veranschaulichen die Funktionsweise des erfindungsgemäßen Flurförderzeugs bei der Abstapelung eines bereits vorhandenen Palettenstapels.

### Bevorzugte Ausführungsform der Erfindung

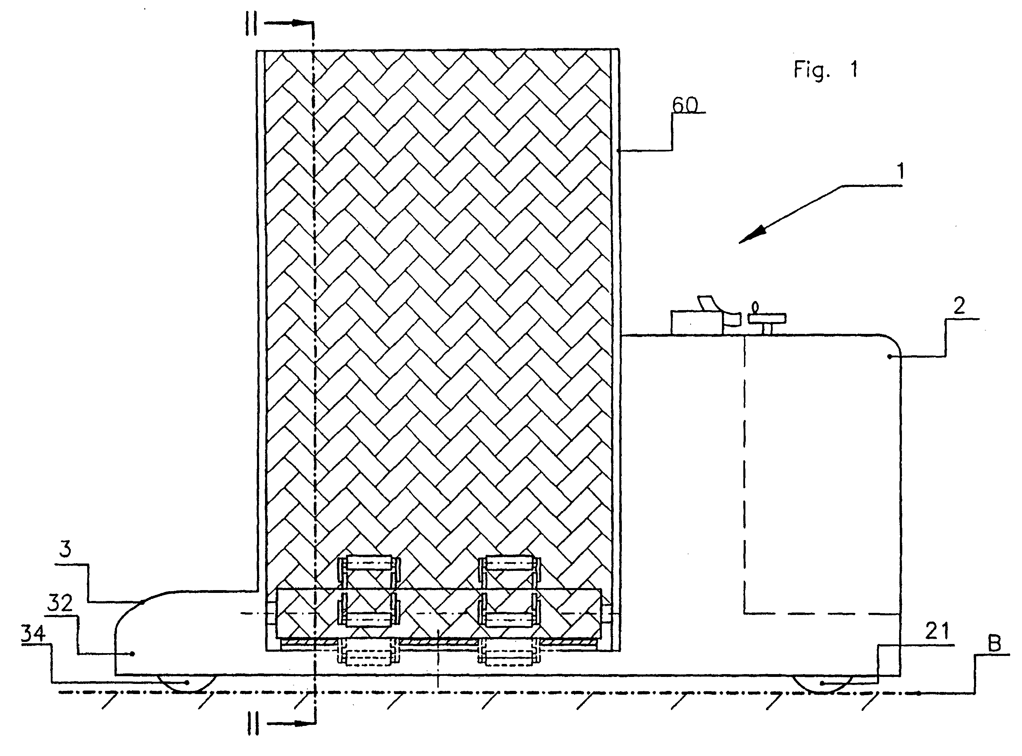

Bezugnehmend auf die Figuren 1 bis 6 wird nachstehend die bevorzugte Ausführungsform des erfindungsgemäßen Flurförderzeugs 1 beschrieben.

Wie es beispielsweise in Figur 1 gezeigt ist, umfaßt das erfindungsgemäße Flurförderzeug 1, einem Elektro-Gabelhubwagen ähnlich, einen Antriebsteil 2 und einen Lastteil 3. Im Bereich des Antriebsteils 2 steht das Flurförderzeug 1 mit einem lenkbaren Antriebsrad 21 und einer (nicht dargestellten) Schwenkrolle auf dem Boden.

Im Antriebsteil 2 ist ein (nicht dargestellter) Batteriekasten zur Stromversorgung einer (nicht dargestellten) elektrischen Fahrantriebsmaschine sowie einer (nicht dargestellten) elektrischen Walzenantriebsmaschine untergebracht. Des weiteren umfaßt der Antriebsteil 2 ein Bedienpult 22 mit einem Schwenkbedienhebel 23 für Vorwärtsund Rückwärtsfahrt, einem Lenkrad 24, einem Ein/Ausschalter 25, einer Batteriestandsanzeige 26 sowie mehreren Schaltern und Kontrolleuchten 27 zur Angabe der vom Flurförderzeug 1 ausgeführten Funktionen, Steuerungsund Antriebsmodi hinsichtlich Fahrantrieb, Walzenantrieb und dergleichen. Auf der dem Lastteil 3 abgewandten Seite des Antriebsteils 2 befindet sich eine Plattform 29, auf der die das Flurförderzeug bedienende Person vorzugsweise quer zur Fahrt- bzw. Längsrichtung L des Flurförderzeugs sitzt oder steht. Schließlich ist an der Plattform 29 ein mit dem Fuß zu betätigender Sicherheitsschalter 28 vorgesehen, der erst bei einer Betätigung durch den Bediener den Betrieb des Flurförderzeugs ermöglicht.

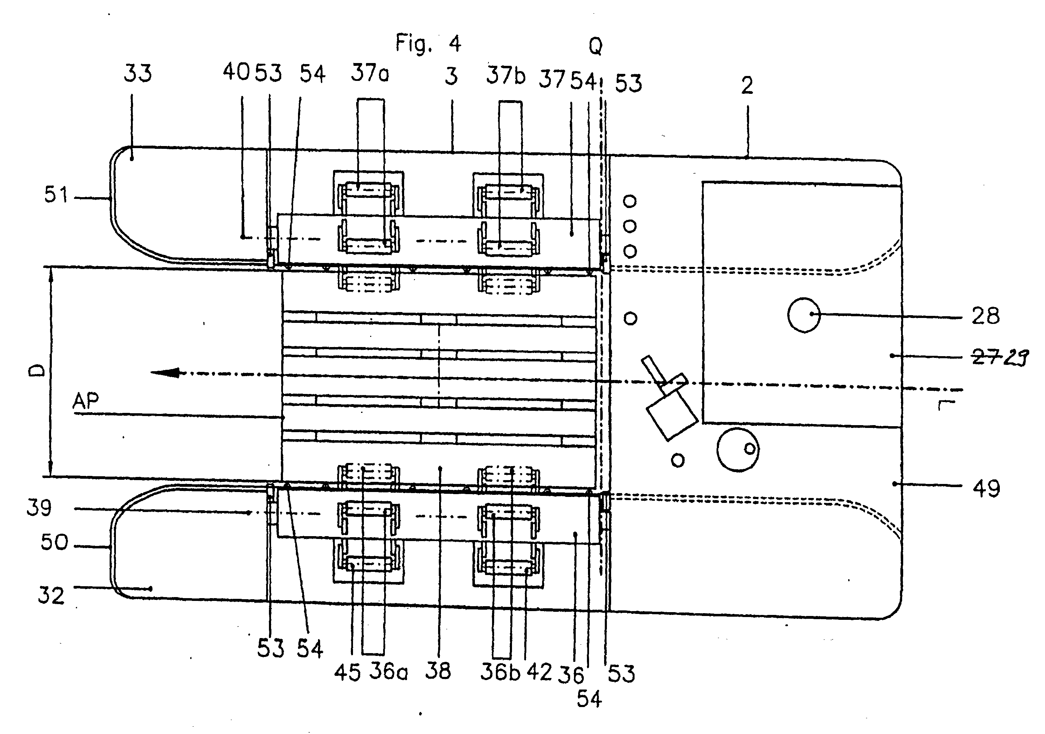

Der Lastteil 3 umfaßt zwei sich in Längsrichtung erstreckende Radarme 32 und 33 die den Lastteil 3 des Flurförderzeugs 1 mit Lastrollen 34 bzw. 35 auf dem Boden B abstützen. Wie es in Fig. 4 angedeutet ist, sind die Radarme 32 und 33, in Querrichtung Q des Flurförderzeugs 1 betrachtet, in einem Abstand D zueinander angeordnet, der so groß ist, daß eine aufzunehmende Palette 38, beispielsweise eine sogenannte "Europalette" mit einer Länge von 1200mm, einer Breite von 800 mm und einer Höhe von 150 mm, zwischen den Radarmen 32 und 33 bzw. den nachstehend beschriebenen Lastarmen 36 und 37 angeordnet werden kann.

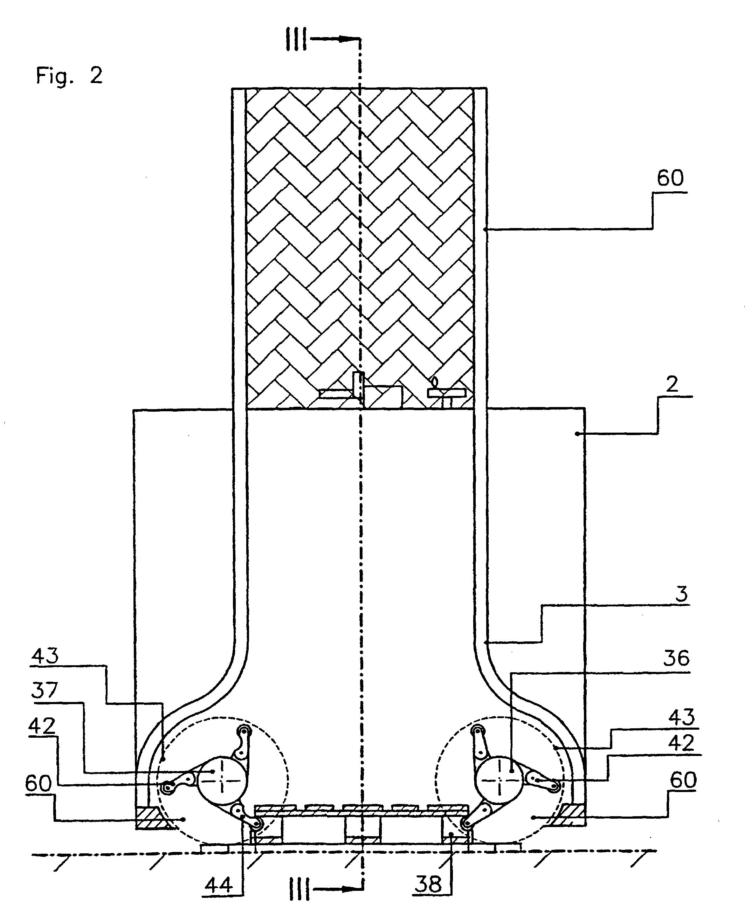

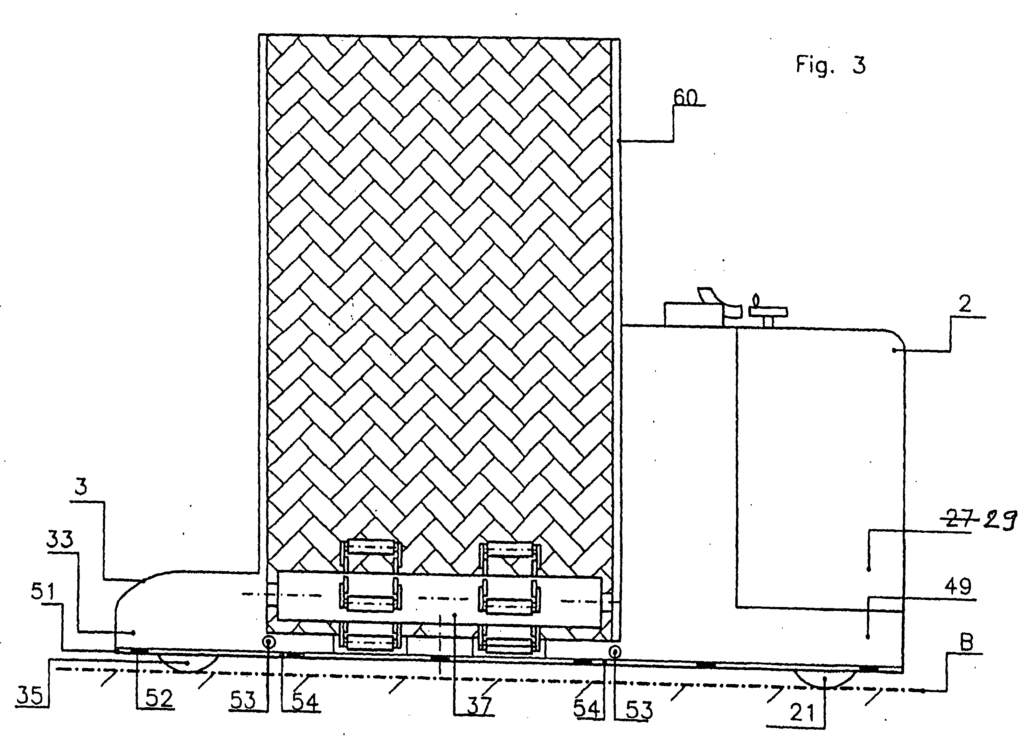

Der Lastteil 3 weist des weiteren die beiden Lastarme 36 und 37 auf, die sich am Antriebsteil 2 bzw. an den jeweiligen Radarmen 32 und 33 abstützen, wie es beispielsweise aus Figur 3 ersichtlich ist. Die Lastarme 36 und 37 haben die Funktion, eine dazwischen angeordnete Palette 38, die im übrigen bepackt oder unbepackt sein kann, aufzunehmen, d.h. zu ergreifen und anzuheben bzw. abzusetzen. Die Lastarme 36 und 37 sind in der bevorzugten Ausführungsform jeweils als Walzen ausgeführt, die um eine Drehachse 39 bzw. 40 an dem entsprechenden Radarm 32 bzw. 33 und dem Antriebsteil 2 drehbar gelagert sind, wie es beispielsweise aus den Figuren 2 und 4 ersichtlich ist. In der bevorzugten Ausführungsform sind die Drehachsen 39 und 40 der beiden Walzen 36 bzw. 37 zwar horizontal und vertikal stationär angeordnet, jedoch können sie beispielsweise vor der erstmaligen Inbetriebnahme des Flurförderzeugs oder im Rahmen von Wartungsarbeiten justiert werden.

An den Walzen 36 und 37 sind jeweils zwei Gruppen 36a und 36b bzw. 37a und 37b von flügelartig angelenkten Palettenaufnehmern 42 vorgesehen. Die beiden Palettenaufnehmergruppen 36a und 36b bzw. 37a und 37b sind in Längsrichtung voneinander beabstandet angeordnet, wobei der Abstand dem Abstand von an Palette 38 zu deren Aufnahme vorgesehenen (nicht dargestellten) Aussparungen angepaßt ist.

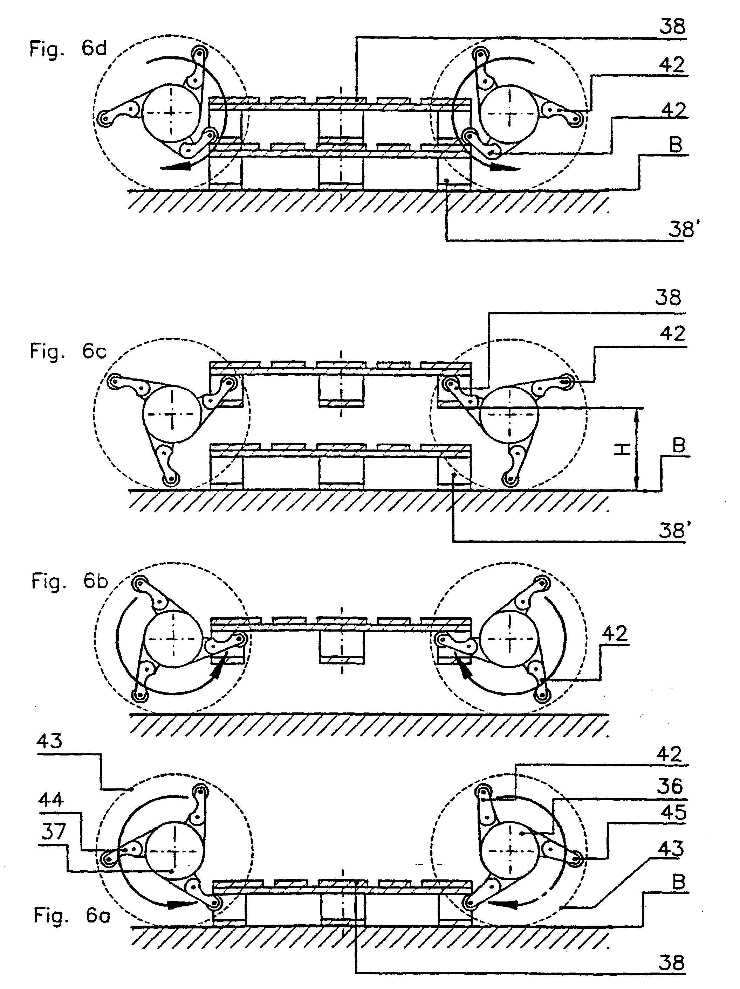

Wie es insbesondere aus den Figuren 2, 5 und 6a hervorgeht, umfaßt jede Palettenaufnehmergruppe 36a und 36b bzw. 37a und 37b, in Umfangsrichtung der jeweiligen Walze 32 bzw. 33 betrachtet, drei gleichmäßig beabstandete Palettenaufnehmer 42, die an der entsprechenden Walze 32 bzw. 33 mittels eines federvorgespannten Scharniers 44 flügelartig angelenkt sind, und zwar in der Weise, daß die Palettenaufnehmer 42 tendentiell eine Tangentialstellung einzunehmen, in der sie sich im wesentlichen tangential über den Außenumfang der entsprechenden Walze 32 bzw. 33 erstrecken. Die Palettenaufnehmer können jedoch gegen die Vorspannkraft in eine Umfangsstellung geschwenkt werden, in der sie im wesentlichen in Umfangsrichtung der entsprechenden Walze ausgerichtet sind, wie dies beispielsweise aus Figur 6d ersichtlich ist.

Die Palettenaufnehmer 42 weisen jeweils an ihrem mit der Palette 38 in Kontakt tretenden Ende eine drehbar gelagerte Kontaktrolle 45 auf, die beim Eingriff der Palettenaufnehmers 42 in die Palette 38 an dieser abrollt. In der bevorzugten Ausführungsform sind die Kontaktrollen 45 jeweils aus einem elastischen und damit stoßdämpfenden Material hergestellt.

Bei einer synchron gegenläufigen Drehung der Walzen 36 und 37 bewegen sich die Kontaktrollen 45 der Palettenaufnehmer 42 jeweils auf einer Kreisbahn 43. Der Abstand der Drehachsen 39 und 40 der beiden Walzen 36 bzw. 37 sowie der Durchmesser der Kreisbahnen 43 sind im besonderen so eingestellt bzw. vorgegeben, daß die Palettenaufnehmer 42 bei ihrer Kreisbewegung in entsprechende Aussparungen in der zwischen den Walzen 36 und 37 angeordneten Palette 38 eingreifen und die Palette 38 bei einer weiteren Kreisbewegung mitnehmen und in eine bestimmte Höhe H anheben, wie es sich aus den Figuren 6a bis 6d ergibt. Durch eine synchrone gegenläufige Drehbewegung der beiden Walzen 36 und 37 sind die Palettenaufnehmer 42 daher in der Lage, die Palette 38 aufzunehmen und diese allein durch eine weitere Kreisbewegung in eine bestimmte Höhe anzuheben. Eine weitere Drehbewegung der Lastarme hätte dann zur Folge, daß die Palettenaufnehmer außer Eingriff mit der angehobenen Palette gerät, wodurch diese zu Boden fallen würde. Daher wird die Drehbewegung der Walzen 36 und 37 angehalten, sobald die Palette 38 die bestimmte Höhe H (entsprechend der Palettenhöhe einschließlich eines Sicherheitsabstands von ca. 2 cm) erreicht hat.

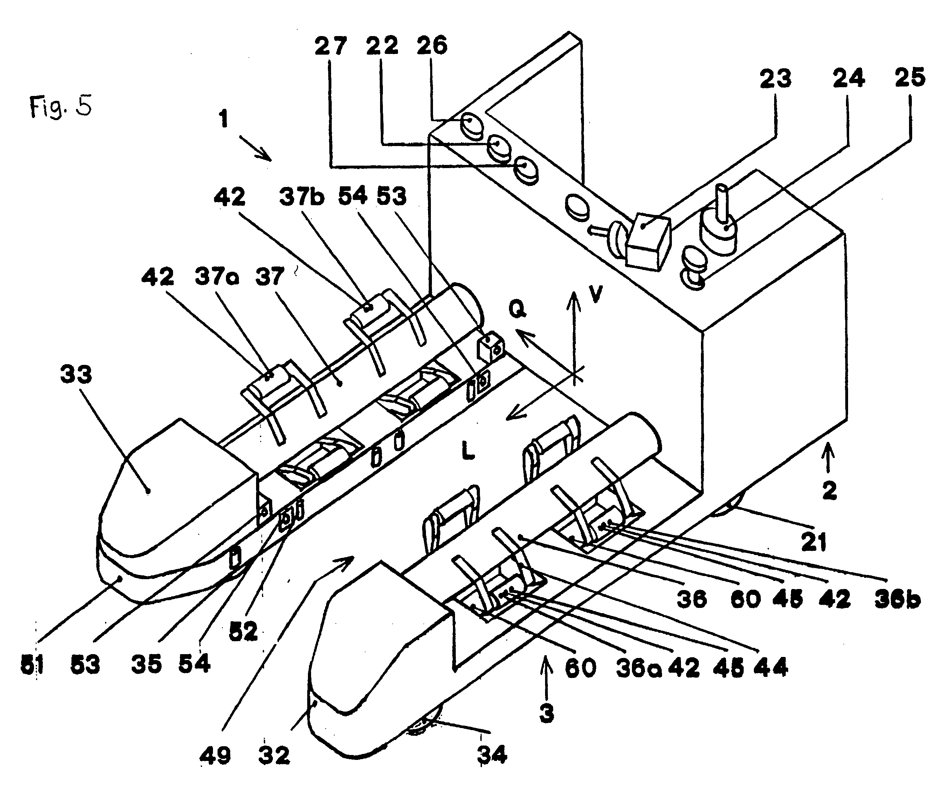

Die Radarme 32 und 33 des Flurförderzeugs 1 sind im besonderen ferner so ausgestaltet, daß sie eine Anordnung der Walzen 36 und 37 einschließlich der Palettenaufnehmer 42 derart erlauben, daß zum einen eine ungehinderte Drehbewegung der Walzen 36 und 37 und zum anderen eine ungehinderte Kreisbewegung der Kontaktrollen 45 der Palettenaufnehmer 42 möglich ist. Hierzu sind an den Radarmen 32 und 33 entsprechende Aussparungen 60 vorgesehen, die beispielsweise aus den Figuren 2 und 5 ersichtlich sind. Vor Inbetriebnahme des Flurförderzeugs bzw. im Rahmen von Wartungsarbeiten werden die Walzen 36 und 37 so justiert, daß bei einer Drehbewegung der Walzen 36 und 37 die Palettenaufnehmer 42 einerseits weder den Boden B noch die Radarme 32 bzw. 33 berühren und andererseits mit der aufzunehmenden Palette 38 form- und/oder kraftschlüssig in und außer Eingriff gebracht werden können. In der bevorzugten Ausführungsform beträgt der Walzenradius ca. 18 cm, der Radius der Kreisbahn 43 der Kontaktrollen 45 der Palettenaufnehmer 42 ca. 42 cm und die Bodenfreiheit ca. 2 cm.

Der Lastteil 3 des erfindungsgemäßen Flurförderzeugs umfaßt des weiteren eine Zufuhreinrichtung in Form eines sich in Längsrichtung über den Lastteil 3 und den Antriebsteil 2 erstreckenden Führungskanals 49, der in seitlicher Richtung von zwei Führungsschienen 50 und 51 begrenzt ist, die jeweils einem der beiden Radarme 32 und 33 zugeordnet sind. Die Führungsschienen 50 und 51 leiten eine auf dem Boden liegende Leerpalette, während diese vom Flurförderzeug "überfahren" oder eingesammelt wird, zwischen die beiden Walzen 36 und 37, so daß diese die Palette 38 aufnehmen können, sobald die Palette 38 sich, in Fahrt- bzw. Längsrichtung L betrachtet, in einer sogenannten Aufnahmeposition AP befindet. Da sich der Führungskanal 49 einschließlich der Führungsschienen 50 und 51 über den Lastteil 3 und den Antriebsteil 2 des erfindungsgemäßen Flurförderzeugs 1 hinweg erstreckt, kann eine auf dem Boden liegende Palette 38 sowohl während der Vorwärtsfahrt als auch während der Rückwärtsfahrt des Flurförderzeugs 1 eingesammelt werden.

Die Führungsschienen 50 und 51 weisen jeweils eine Vielzahl von in Fahrt- bzw. Längsrichtung des Flurförderzeugs 1 beabstandet angeordneten Führungsrollen 52 auf, die um eine vertikal ausgerichtete Drehachse drehbar angeordnet sind. Diese Führungsrollen 52 haben die Funktion, die Reibkräfte zu minimieren, die beim Überfahren und Einsammeln einer auf dem Boden liegenden Palette 38, die aufgenommen werden soll, zwischen den Führungsschienen 50 und 51 der Zufuhreinrichtung und der Palette 38 auftreten.

Um die eingesammelte Palette 38 in der vorstehend genannten Aufnahmeposition AP, die aus Figur 4 ersichtlich ist, zu positionieren, sind im Führungskanal 49 bzw. an den Führungsschienen 50 und 51 ferner Arretierbolzen 53 vorgesehen, die horizontal quer zur Fahrt- bzw. Längsrichtung L ausfahrbar sind. Die Arretierbolzen 53 ermöglichen eine lösbare Arretierung der aufzunehmenden Palette 38 in der Aufnahmeposition AP zwischen den beiden Walzen 36 und 37. Das Flurförderzeug 1 muß daher nach dem Überfahren und Einsammeln einer Palette 38 nicht angehalten werden, da die eingesammelte Palette 38 in der bestimmten Aufnahmeposition AP, in der sie von den Palettenaufnehmern 42 aufgenommen werden kann, festgehalten wird. Die aufzunehmende Palette wird vielmehr, nachdem sie die vorbestimmte Aufnahmeposition AP eingenommen hat, bis zu ihrer Wegnahme vom Boden B ein kurzes Stück in Fahrtrichtung des Flurförderzeugs 1 hergeschoben. Durch eine entsprechende Abstimmung der Fahrgeschwindigkeit des Flurförderzeugs auf die Geschwindigkeit, mit der die Palette 38 aufgenommen wird, läßt sich in diesem Fall, die Distanz minimieren, über die die Palette 38 auf dem Boden B liegend geschoben wird.

Neben den Arretierbolzen 53 sind ferner Aufnahmepositionssensoren 54, beispielsweise in Form von Endlagenschaltern oder -tastern vorgesehen, die erfassen, ob die Palette 38 die vorbestimmte Aufnahmeposition AP eingenommen hat und dies ggf. durch die Abgabe eines entsprechenden elektrischen Signals anzeigt. In Abhängigkeit von dem elektrischen Signal kann der Bediener des Flurförderzeugs 1 dann erkennen, daß sich die Palette 38 in der Aufnahmeposition 38 befindet und aufgenommen werden kann.

Der Antriebsteil 2 des Flurförderzeugs 1 umfaßt ferner eine (nicht dargestellte) Steuereinrichtung mittels der die Walzen 36 und 37 angesteuert werden können. Diese Steuereinrichtung ist in dieser Ausführungsform an die Aufnahmepositionssensoren 54 gekoppelt und erlaubt erst nach Abgabe des elektrischen Signals, das angibt, daß sie die Palette 38 in der Aufnahmeposition AP befindet, die Aufnahme der Palette 38 mittels der Walzen 36 und 37. Der Bediener kann wählen, ob er die Ansteuerung der Walzen 36 und 37 selbst auslöst oder, ob die Ansteuerung der Walzen 36 und 37 in Abhängigkeit vom dem elektrischen Signal der Aufnahmepositionssonoren automatisch erfolgt.

Im Bereich der Radarme 32 und 33 sind ferner in Fahrt- bzw. Längsrichtung L ausfahrbare Zughaken 55 vorgesehen, die dazu dienen, eine seitlich an einer Wand anliegende Palette, die eigentlich mittels des erfindungsgemäßen Flurförderzeugs nicht eingesammelt werden kann, so von der Wand wegzuziehen, daß sie für das erfindungsgemäße Flurförderzeug 1 greifbar wird. In eingefahrenem Zustand stehen diese Zughaken nicht vor, so daß mittels des Flurförderzeugs ferner auch ein Palettenstapel vor dem Fiurförderzeug hergeschoben werden kann.

Über den Lastarmen 36 und 37 befindet sich schließlich ein Aufnahmekorb 60, der einerseits die Funktion hat, die eingesammelten und aufgenommenen Paletten in Vertikalrichtung geführt aufzunehmen, um ein umkippen des aus den aufgenommenen Paletten gebildeten Palettenstapels zu verhindern. Andererseits hat der Aufnahmekorb 60 die Fuktion, die zur Erstellung eines Palettenstapels aufgenommenen Paletten so nacheinander auszurichten, daß sich ein Palettenstapel mit innerhalb eines bestimmten Toleranzbereichs liegenden äußeren Abmessungen ergibt. Am Aufnahmekorb 60 ist ferner ein verstellbarer Endschalter angebracht, der das Erreichen einer bestimmten Höhe und damit einer bestimmten Anzahl von gestapelten Paletten angibt.

Unter Bezugnahme auf die Figuren 6a bis 6d wird nachstehend der Betrieb und die Funktionsweise des erfindungsgemäßen Flurförderzeugs erläutert. Hierzu wird die Erstellung eines aus mehreren Paletten bestehenden Palettenstapels beschrieben.

Das Erstellen eines Palettenstapels mittels des erfindungsgemäßen Flurförderzeugs läßt sich realisieren, indem zunächst eine einzelne, auf dem Boden B herumliegende Palette 38 überfahren bzw. eingesammelt wird, wobei die eingesammelte Palette 38 durch den Führungskanal zwischen den beiden Radarmen 32 und 33 und definiert zwischen den beiden Walzen 36 und 37 plaziert wird. Mit dem Erreichen der Aufnahmeposition AP werden die eingesammelten Paletten durch die Arretierbolzen 53 in der Aufnahmeposition AP gehalten, und zwar auch dann, wenn die Fahrt fortgesetzt wird. Die Aufnahmeposition AP der Paletten 38 wird durch den Aufnahmepositionssensor 54 erkannt, woraufhin dieser ein entsprechendes Signal abgibt.

In Abhängigkeit von dem elektrischen Signal des Aufnahmepositionssesnsors werden die Walzen 36 und 37 schließlich entweder manuell durch den Bediener oder automatisch durch die Steuereinrichtung angesteuert, wodurch die Walzen 36 und 37 jeweils in die in Figur 6a angegebenen Drehrichtungen in Drehbewegung versetzt werden, wobei die Palettenaufnehmer 42 jeweils in die Palette 38 greifen.

Im Verlauf der weiteren Drehbewegung nehmen die Palettenaufnehmer 42 die Palette 38 nach oben mit, wie dies in Figur 6b veranschaulicht ist.

Sobald die Palette 38 so weit angehoben ist, daß unter der angehobenen Palette 38 genügend Platz für eine weitere Palette 38' vorhanden ist, wird die Drehbewegung der Walzen 36 und 37 angehalten, wodurch die Palette 38 zunächst in der bestimmten Höhe H gehalten wird. Dies ist in Figur 6c dargestellt.

In diesem Zustand kann die nächste Palette 38' überfahren und eingesammelt werden. Nachdem wieder erkannt wurde, daß die eingesammelte Palette 38' die Aufnahmeposition AP eingenommen hat, werden die Walzen 36 und 37 erneut in Drehbewegung versetzt, jedoch in die entgegengesetzte Drehrichtung, wie dies aus Figur 6d ersichtlich ist, wodurch sich die Palettenaufnehmer 42 nach unten bewegen und die erste Palette 38 auf der Palette 38' absetzen.

Bei fortgesetzter Drehbewegung der Walzen 36 und 37 nach unten stoßen die Palettenaufnehmer 42' von oben gegen ein unteres Bodenbrett der ersten Palette 38 und schwenken aufgrund der flügelartigen Anlenkung an die jeweilige Walze 36 bzw. 37 gegen die Federvorspannkraft in die Umfangsstellung, in der die Palettenaufnehmer 42' jeweils im wesentlichen in Umfangsrichtung der jeweiligen Walze 36 bzw. 37 ausgerichtet werden, wie dies aus Fig. 6d ersichtlich ist. In dieser Ausführungsform schwenken die Palettenaufnehmer 42 somit zur jeweiligen Walze 36 bzw. 37 hin, um von der höher liegenden Palette 38 in die tiefer liegende Palette 38' gleiten zu können. Aufgrund der Kontaktrolle rollen die Palettenaufnehmer 42' dabei jeweils an den beiden Paletten 38 und 38' ab. Wie vorstehend erwähnt, wird die hierzu erforderliche Schwenkbewegung durch die flügelartige Anlenkung der Palettenaufnehmer 42 an die jeweiligen Walzen 36 und 37 ermöglicht.

Nach dem Eingriff der Palettenaufnehmer 42 in die Palette 38' wird die Drehrichtung der Walzen erneut umgekehrt, wodurch die Palettenaufnehmer 42, wie in Figur 6a dargestellt, den mittlerweile aus der Palette 38 und 38' bestehenden Palettenstapel anheben.

Die vorstehend beschriebenen Schritte werden nun so lange wiederholt, bis der Palettenstapel eine bestimmte Höhe erreicht hat, die durch am Aufnahmekorb vorgesehenen Endschalter erkannt wird. Daraufhin wird die automatische oder manuelle Ansteuerung der Walzen beendet. Mittels des erfindungsgemäßen Flurförderzeugs kann der Palettenstapel nun an eine gewünschte Stelle transportiert und an dieser Stelle per Knopfdruck abgestellt werden.

Die Erstellung des Palettenstapels, d.h. die Ausführung der vorstehend beschriebenen Schritte, erfolgt abgesehen von der Steuerung des Flurförderzeugs entweder automatisch oder manuell, d.h. durch Betätigung verschiedener Funktionsschalter durch den Bediener des Flurförderzeugs. Das Einsammeln und Aufnehmen der Paletten kann aufgrund des sich durch den Last- und Antriebsteil erstreckenden Führungskanal in Vorwärts- und Rückwärtsfahrt erfolgen. Zu diesem Zweck sind in der bevorzugten Ausführungsform daher, in Fahrt- bzw. Längsrichtung des Flurförderzeugs betracht, jeweils vor und hinter der durch die Anordnung der Paletteaufnehmer vorgegebenen Aufnahmeposition im Führungskanal Arretierungsbolzen und Aufnahmepositionssensoren vorgesehen. Die Aufnahme in Vorwärtsfahrt des Flurförderzeugs ist jedoch nur bis zur Augenhöhe sinnvoll, da der Palettenstapel danach der Bedienperson die Sicht nimmt.

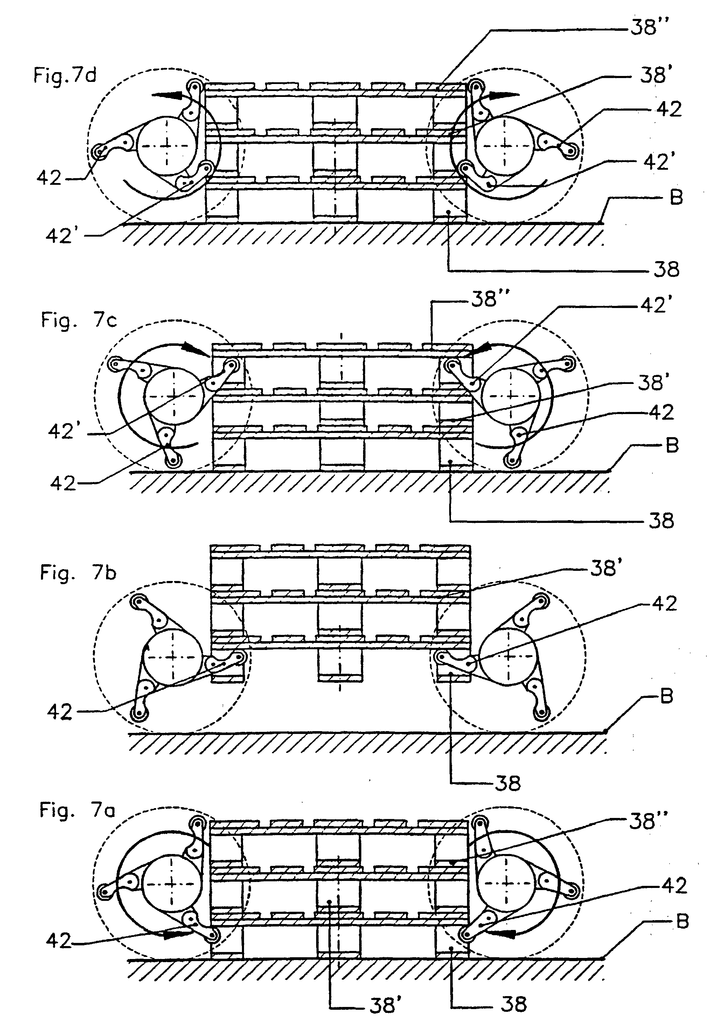

Unter Bezugnahme auf die Figuren 7a bis 7d wird nun die Abstapelung eines bereits vorhandenen Palettenstapels erläutert, was prinzipiell in umgekehrter Reihenofolge erfolgt wie das Erstellen eines Palettenstapels.

Zunächst nimmt das erfindungsgemäße Flurförderzeug einen bereits vorhandenen Stapel von Leerpaletten 38, 38', 38'' usw. auf, indem es den Palettenstapel zwischen den Radarmen und Walzen einfängt und durch eine entsprechende Ansteuerung der beiden Walzen den Palettenstapel, wie es aus Figur 7a ersichtlich ist, über die unterste Palette 38 so weit anhebt, daß ein Transport des Palettenstapels ohne Bodenkontakt möglich ist.

In diesem Zustand wird der Palettenstapel an die gewünschte Stelle, an der die unterste Palette 38 abzusetzen ist, wobei der Palettenstapel während des Transports in der vorher eingenommenen Höhe gehalten wird. Dies ist in Figur 7b veranschaulicht.

An der gewünschten Stelle erfolgt durch eine manulle Ansteuerung der beiden Walzen durch den Bediener eine Drehbewegung der beiden Walzen nach unten, wie es sich aus Fig. 7c ergibt, wodurch der Palettenstapel auf den Boden B gesetzt wird und die bislang mit der untersten Palette 38 in Eingriff stehenden Palettenaufnehmer 42 aus den entsprechenden Aussparungen gleiten. Diese Drehbewegung wird so lange fortgesetzt, bis die, in Umfangs- und Drehrichtung der jeweiligen Walzen betrachtet, nächstliegenden Palettenaufnehmer 42', nachdem sie unter Ausführung einer Schwenkbewegung hin zur jeweiligen Umfangsstellung entlang der in dritter Reihe liegenden Palette 38'' abgerollt sind, in die entsprechenden Aussparungen der in zweiter Reihe liegenden Palette 38' eingreifen, wie dies aus Figur 7c ersichtlich ist.

Anschließend werden die Walzen in eine Drehbewegung in die umgekehrte Drehrichtung versetzt, wie dies in Figur 7d gezeigt ist, wodurch die Palettenaufnehmer 42' nun den Palettenstapel ab der zweiten Palette 38' anheben, und zwar so weit, bis die unterste Palette 38 freigegeben wird.

Anschließend kann das Flurförderzeug mit dem um die unterste Palette reduzierten Palettenstapel verfahren werden, um die vorstehend genannten Schritte zu wiederholen. Dies kann so lange fortgesetzt werden, bis der Palettenstapel vollständig abgebaut ist.

Im folgenden werden mögliche Abwandlungen zur bevorzugten Ausführungsform bzw. weitere Ausführungsformen des erfindungsgemäßen Flurförderzeugs erläutert.

In der vorstehend beschriebenen Ausführungsform wird die Aufnahme der Palette dadurch bewerkstelligt, daß die Palettenaufnehmer sich durch eine Drehung der Walzen jeweils auf einer Kreisbahn bewegen. Das Anheben der Palette erfolgt somit durch einen Horizontal- und Vertikalbewegungsanteil der Kreisbewegung der Palettenaufnehmer. Sind die Palettenaufnehmer mit der Palette einmal in Eingriff gebracht, ließe sich das Anheben der Palette jedoch auch dadurch bewerkstelligen, daß anstelle einer weiteren Drehbewegung der Walzen, die Walzen vertikal angehoben werden. Ebenso könnte das Anheben der Palette durch eine Kombination aus der Dreh- und Vertikalbewegung der Walzen erzielen. Die Bewegung der Palettenaufnehmer quer zur Längsrichtung könnte durch eine ausschließliche Bewegung der Lastarme erfolgen. Ebenso ist aber auch eine Bewegung der an den Lastarmen vorgesehenen Palettenaufnehmern oder eine kombinierte Bewegung der Lastarme und der Palettenaufnehmern möglich.

In der bevorzugten Ausführungsform sind die Palettenaufnehmer jeweils flügelartig an die jeweilige Walze angelenkt. Dies ist jedoch nicht unbedingt erforderlich. Die Palettenaufnehmer könnten ebenso starr an die jeweilige Walze angebracht sein, wobei in diesem Fall die in der bevorzugten Ausführungsform erforderliche Schwenkbewegung der Palettenaufnehmer zur jeweiligen Walze hin, dadurch umgangen werden kann, daß die jeweiligen Walzen horizontal quer zur Längsrichtung des Flurförderzeugs von der Palette weg verstellt werden.

Anstelle der als Walzen ausgestalteten Lastarme gemäß der bevorzugten Ausführungsform könnten die Lastarme jeweils eine Vielzahl von in Längsrichtung beabstandeten, vertikal ausgerichteten Fördereinrichtungen mit einem Fördermittel, wie z.B. einem Förderband oder einer Förderkette, umfassen. Die jeweiligen Palettenaufnehmer wären in diesem Fall an dem jeweiligen Fördermittel vorgesehen. Die Fördermittel wären synchron gegenläufig antreibbar. Wie in der bevorzugten Ausführungsform könnten die Fördermittel jeweils eine Vielzahl von in Laufrichtung gleichmäßig beabstandeten Palettenaufnehmer aufweisen. Ebenso könnten Palettenaufnehmer mittels eines federvorgespannten Scharniers an dem jeweiligen Fördermittel derart flügelartig angelenkt sein, daß sie unter der Wirkung der Federvorspannung eine Normalstellung einnehmen, in der sie normal zum jeweiligen Fördermittel ausgerichtet sind, und gegen die Vorspannkraft in eine Parallelstellung schwenkbar sind, in der sie im wesentlichen parallel zum Fördermittel ausgerichtet sind.

In einer weiteren Abwandlung zur bevorzugten Ausführungsform könnten wie im Fall eines Gegengewichtstaplers, eines radunterstützten Staplers oder eines Schubmaststaplers, an einem vertikal bewegbaren Lastschlitten vorgesehen sein, der entlang eines dem Lastteil zugeordneten Hubmasts auf- und abbewegbar ist, wobei die Lastarme wiederum horizontal quer zur Fahrt- bzw. Längsrichtung des Flurförderzeugs verstellbar sein können. Die Palettenaufnehmer könnten daher auch als zur aufzunehmenden Palette hin ausgerichtete Zinkenkörper ausgestaltet sein, die durch Horizontal- und Vertikalbewegungen, jeweils quer zur Fahrt- bzw. Längsrichtung des Flurförderzeugs, mit der entsprechenden Aussparungen an der aufzunehmenden Palette in Eingriff bringbar sind.

Wenn die Lastarme von einem vertikal bewegbaren Lastschlitten getragen werden, ist es, im Gegensatz zur bevorzugten Ausführungsform möglich, einen bereits vorhandenen Palettenstapel nicht palettenweise sondern auch stoßweise abzustapeln. Außerdem wäre es in diesem Fall auch möglich, eine Palette oder einen Palettenstapel beispielsweise auf einen LKW oder eine Rampe zu heben bzw. vom LKW oder von der Rampe herunterzuheben.

Ferner wäre es möglich, die Lastarme und/oder die Palettenaufnehme in Abängigkeit von der jeweils aufzunehmenden Palette bzw. der palettierten Last sowie unter Berücksichtigung der jeweils vorherrschenden Umgebungsbedingungen der Palettenaufnehmer, einschließlich des zur Verfügungen stehenden Raums, beispielsweise in der Art und Weise von Nocken und Nockenfolger eine entsprechende kinematische Bewegung ausführen zu lassen.

Die Radarme könnten die jeweiligen Lastarme, in Querrichtung betrachtet, seitlich umgehen oder, in Vertikalrichtung betrachtet, jochartig überbrücken.

In einer vorteilhaften Weiterbildung umfaßt der Aufnahmekorb eine Arretiereinrichtung, beispielsweise einen oder mehrere federvorgespannte Schwenkhaken, der bzw. die eine lösbare Arretierung der im Aufnahmekorb aufgenommene(n) Leerpalette(n) in einer bestimmten Höhe ermöglicht bzw. ermöglichen. Diese Weiterbildung erleichtert sowohl die Erstellung als auch die Abstapelung eines Palettenstapels, da es die Möglichkeit schafft, den Palettenstapel ab einer beliebigen Paletten, beispielsweise der zweiten Palette von unten, über die Arretiervorrichtung festzuhalten, während die unterste Palette über den Eingriff der Palettenaufnehmer und die entsprechende Ansteuerung der Lastarme auf dem Boden abgestellt werden kann. Anschließend kann der von der Arretiervorrichtung festgehaltene Palettenstapel wieder von den Lastarmen übernommen und vorstehend beschriebene Vorgang erneut eingeleitet werden

Das erfindungsgemäße Flurförderzeug läßt sich als ein eigenständiges Gerät oder in Form eines Sonderanbaugeräts für einen radunterstützten Stapler, Gegengewichtsstapler, oder Schubmaststapler realisieren.

Wenngleich das erfindungsgemäße Flurförderzeug speziell für die Handhabung von Leerpaletten eines bestimmten Formats, insbesondere von sogenannten Europaletten, konzipiert ist, kann es prinzipiell auch zum Transport einer Palette, einer palettierten Last oder eines Palettenstapels eingesetzt werden.

### Gewerbliche Anwendbarkeit

Das erfindungsgemäße Flurförderzeug ist insbesondere zur Handhabung von Leerpaletten beispielsweise in Kommissionierbereichen und Stückgutspeditionen geeignet. Als sinnvoll erscheint der Einsatz der Stapelameise ab einer täglichen Menge an Leerpaletten, die bei Handarbeit als nicht mehr zumutbar zu erachten ist. Als reines Transportmittel von bepackten Paletten ist die Stapelameise geeignet. Erhebliche Vorteile bei dieser Tätigkeit ergeben sich bei der Förderung von Sonderpaletten.

## Patentansprüche

1. Flurförderzeug zur Handhabung von Paletten (38), mit einem Antriebsteil (2) und einem Lastteil (3), wobei der Lastteil (3) zwei in Fahrt- bzw. Längsrichtung (L) des Flurförderzeugs ausgerichtete Lastarme (36, 37) umfaßt, wobei die Funktionen im Zusammenhang mit der Handhabung einer Palette (38), d.h. die Aufnahme, das Anheben und das Halten der Palette (38), ausschließlich von den Lastarmen (36, 37) ausgeführt werden, **dadurch gekennzeichnet, daß**
die Lastarme (36, 37), in Fahrt- bzw. Längsrichtung (L) betrachtet, jeweils auf verschiedenen Seiten der aufnehmbaren Palette (38) vorgesehen sind und eine Vielzahl von in Fahrt- bzw. Längsrichtung (L) beabstandeten Palettenaufnehmern (42) aufweisen, die durch eine Bewegung quer zur Fahrt- bzw. Längsrichtung (L) in oder außer Eingriff mit der Palette (38) bringbar sind.

2. Flurförderzeug nach Anspruch 1, **dadurch gekennzeichnet, daß** die Palettenaufnehmer (42) formschlüssig in Eingriff mit der Palette (38) bringbar sind.

3. Flurförderzeug nach Anspruch 1 oder 2, **dadurch gekennzeichnet, daß** die Lastarme (36, 37) quer zur Fahrt- bzw. Längsrichtung (L) horizontal und vertikal verstellbar sind.

4. Flurförderzeug nach einem der Ansprüche 1 bis 3, **dadurch gekennzeichnet, daß** der Lastteil (3) einen vertikal verstellbaren Lastschlitten umfaßt, der die Lastarme trägt.

5. Flurförderzeug nach einem der Ansprüche 1 bis 4, **dadurch gekennzeichnet, daß** die Palettenaufnehmer (42) jeweils eine drehbar gelagerte Kontaktrolle (45) umfassen, die bei einem Eingriff der Palettenaufnehmer (42) an der Pälette (38) abrollt.

6. Flurförderzeug nach Anspruch 5, **dadurch gekennzeichnet, daß** wenigstens der Außenumfangsbereich der Kontaktrolle (45) aus einem elastischen Material gebildet ist.

7. Flurförderzeug nach einem der Ansprüche 1 bis 6, **gekennzeichnet durch** eine Zufuhreinrichtung, die während einer Fahrt des Flurförderzeugs die aufzunehmende Palette (38) zwischen die Lastarme (36, 37) führt.

8. Flurförderzeug nach Anspruch 7, **dadurch gekennzeichnet, daß** die Zufuhreinrichtung einen sich über den Lastteil (3) und den Antriebsteil (2) des Flurförderzeugs hinweg erstreckenden Führungskanal (49) aufweist, der an das Format der aufzunehmenden Palette (38) anpaßbar ist, wodurch die aufzunehmende Palette (38) während der Vorwärts- oder Rückwärtsfahrt des Flurförderzeugs eingesammelt und zwischen die Lastarme (36, 37) geführt werden kann.

9. Flurförderzeug nach Anspruch 8, **dadurch gekennzeichnet, daß** der Führungskanal (49) seitlich der aufzunehmenden Palette () von Führungsschienen (50, 51) begrenzt ist, deren Abstand zur Front- und Heckseite des Flurförderzeugs () hin zunimmt.

10. Flurförderzeug nach Anspruch 9, **dadurch gekennzeichnet, daß** die Führungsschienen (50, 51) jeweils mit einer Vielzahl von in Fahrt- bzw. Längsrichtung (L) des Flurförderzeugs beabstandet angeordneten Führungsrollen (57) versehen sind.

11. Flurförderzeug nach einem der Ansprüche 7 bis 10, **dadurch gekennzeichnet, daß** die Zufuhreinrichtung eine Arretiereinrichtung (53) aufweist, die die zwischen die Lastarme (36, 37) geführte Palette (38) in einer vorbestimmten Aufnahmeposition (AP) lösbar arretiert.

12. Flurförderzeug nach Anspruch 11, **dadurch gekennzeichnet, daß** die Arretiereinrichtung (53) mit einem Aufnahmepositionssensor (54) versehen ist, der erfaßt, ob die Palette (38) die vorbestimmte Aufnahmeposition (AP) eingenommen hat, und ein entsprechendes elektrisches Signal abgibt.

13. Flurförderzeug nach Anspruch 12, **gekennzeichnet durch** eine an den Aufnahmepositionssensor (54) gekoppelte Steuereinrichtung, die in Abhängigkeit von dem elektrischen Signal eine Ansteuerung der Lastarme (36, 37) und/oder der Palettenaufnehmer (42) erlaubt, um die Palette (38) aufzunehmen.

14. Flurförderzeug nach Anspruch 13, **dadurch gekennzeichnet, daß** die Steuereinrichtung die Lastarme (36, 37) und/oder die Palettenaufnehmer (42) in Abhängigkeit von dem elektrischen Signal automatisch ansteuert, um die Palette aufzunehmen.

15. Flurförderzeug nach einem der Ansprüche 1 bis 14, **dadurch gekennzeichnet, daß** die Lastarme jeweils eine drehbar gelagerte Walze (36, 37) umfassen, an der die jeweiligen Palettenaufnehmer (42) angebracht sind, wobei die beiden Walzen (36, 37) synchron gegenläufig drehbar sind.

16. Flurförderzeug nach Anspruch 15, **dadurch gekennzeichnet, daß** die Walzen (36, 37) jeweils eine Vielzahl von in deren Umfangsrichtung gleichmäßig beabstandeten Palettenaufnehmern (42) aufweisen.

17. Flurförderzeug nach Anspruch 15 oder 16, **dadurch gekennzeichnet, daß** die Palettenaufnehmer (42) an die jeweilige Walze (36, 37) derart flügelartig angelenkt sind, daß sie unter der Wirkung einer Vorspannkraft eine Tangentialstellung einnehmen, in der sie sich im wesentlichen tangential über den Außenumfang der jeweiligen Walze (36, 37) hinaus erstrecken. und gegen die Vorspannkraft in eine Umfangsstellung schwenkbar sind, in sie im wesentlichen in Umfangsrichtung der jeweiligen Walze (36, 37) ausgerichtet sind.

18. Flurförderzeug nach einem der Ansprüche 1 bis 17, **gekennzeichnet durch** eine über den Lastarmen vorgesehene Aufnahmeeinrichtung (60), die eine geführte Aufnahme einer Vielzahl von Paletten in Vertikalrichtung ermöglicht.

19. Flurförderzeug nach Anspruch 18, **dadurch gekennzeichnet, daß** die Aufnahmeeinrichtung (60) eine Arretiereinrichtung umfaßt, die eine lösbare Arretierung der in der Aufnahmeeinrichtung aufgenommene(n) Leerpalette(n) in einer bestimmten Höhe ermöglicht.

## Claims

1. Industrial truck for handling of pallets (38), with a drive part (2) and a load part (3), where the load part (3) comprises two load arms (36, 37) that are aligned in the direction of travel, i.e. the longitudinal direction (L) of the, industrial truck, wherein the functions in connection with the handling of a pallet (38), i.e. picking up, lifting and holding the pallet (38) are exclusively performed by the load arms (36, 37), **characterized in that**
the load arms (36, 37), viewed in the direction of travel, i.e. the longitudinal direction (L), are each provided on opposite sides of a pallet (38) that can be picked up, and have each a plurality of pallet holders (42) spaced apart in the direction of travel, i.e. the longitudinal direction (L), which can be brought into or out of engagement with the pallet (38) by means of a movement perpendicular to the direction of travel, i.e. the longitudinal direction (L).

2. Industrial truck according to claim 1, **characterized in that** the pallet holders (42) can be brought into engagement with the pallet (38), forming a positive lock.

3. Industrial truck according to claim 1 or 2, **characterized in that** the load arms (36, 37) are horizontally and vertically adjustable, perpendicular to the direction of travel, i.e. the longitudinal direction (L).

4. Industrial truck according to one of claims 1 to 3, **characterized in that** the load' part (3) comprises a vertically adjustable load carriage that carries the load arms.

5. Industrial truck according to one of claims 1 to 4, **characterized in that** the pallet holders (42) comprise each a rotation-mounted contact roller (45) which rolls on the pallet (38) during engagement of the pallet holders (42).

6. Industrial truck according to claim 5, **characterized in that** at least the outside circumference region of the contact roller (45) is formed from an elastic material.

7. Industrial truck according to one of claims 1 to 6, **characterized by** a feed device that guides the pallet (34) to be picked up between the load arms (36, 37) during travel of the industrial truck.

8. Industrial truck according to claim 7, **characterized in that** the feed device has a guide channel (49) that extends beyond the load part (3) and the drive part (2) of the industrial truck, which channel is adjustable to the format of the pallet (38) to be picked up, which makes it possible to collect the pallet (38) to be picked up during forward or reverse travel of the industrial truck, and to be guided between the load arms (36, 37).

9. Industrial truck according to claim 8, **characterized in that** the guide channel (49) is delimited by guide rails (50, 51) at the side of the pallet () to be picked up, the distance between which increases towards the front and the rear of the industrial truck ().

10. Industrial truck according to claim 9, **characterized in that** the guide rails (50, 51) are each provided with a plurality of guide rollers (57) arranged spaced apart in the direction of travel, i.e. the longitudinal direction (L) of the industrial truck.

11. Industrial truck according to one of claims 7 to 10, **characterized in that** the feed device has a locking device (53) that releasably locks the pallet (38) that has been guided between the load arms (36, 37), in a predetermined holding position (AP).

12. Industrial truck according to claim 11, **characterized in that** the locking device (53) is provided with a holding position sensor (54) that detects whether or not the pallet (38) has gone into the predetermined holding position (AP), and gives off a corresponding electrical signal.

13. Industrial truck according to claim 12, **characterized by** a control device coupled with the holding position sensor (54), which allows activation of the load arms (36, 37) and/or the pallet holders (42), as a function of the electrical signal, in order to pick up the pallet (38).

14. Industrial truck according to claim 13, **characterized in that** the control device automatically activates the load arms (36, 37) and/or the pallet holders (42), as a function of the electrical signal, in order to pick up the pallets.

15. Industrial truck according to one of claims 1 to 14, **characterized in that** the load arms comprise each a rotation-mounted roller (36, 37) at which the pallet holders (42) are attached, where the two rollers (36, 37) can be rotated synchronously in opposite directions.

16. Industrial truck according to claim 15, **characterized in that** the rollers (36, 37) have each a plurality of pallet holders (42) spaced uniformly apart in the circumference direction.

17. Industrial truck according to claim 15 or 16, **characterized in that** the pallet holders (42) are coupled with the respective roller (36, 37) in wing-like manner in such a way that they assume a tangential position in which they extend essentially tangentially over the outside circumference of the respective roller (36, 37) under the effect of a bias force, and can be pivoted into a circumference position, counter to the bias force, in which they are essentially aligned in the circumference direction of the respective roller (36, 37).

18. Industrial truck according to one of claims 1 to 17, **characterized by** a holding device (60) provided above the load arms, which allows guided holding of a plurality of pallets in the vertical direction.

19. Industrial truck according to claim 18, **characterized in that** the holding device (60) comprises a locking device that allows releasable locking of the empty pallet(s) held in the holding device, at a certain height.

## Revendications

1. Chariot de manutention pour manipuler des palettes (38) avec une partie d'entraînement (2) et une partie de chargement (3), la partie de chargement (3) comprenant deux bras de chargement (36, 37) orientés en direction de transport ou longitudinale (L) du chariot de manutention, les fonctions en relation avec la manipulation d'une palette (38), c'est-à-dire la prise, l'élévation et le maintien de la palette (38), étant exclusivement réalisées par les bras de chargement (36, 37), **caractérisé en ce que**, vus en direction de transport ou longitudinale (L), les bras de chargement (36, 37) sont prévus à chaque fois sur différents côtés de la palette (38) qu'on peut lever et présentent une pluralité de leveurs de palette (42) qui sont écartés en direction de transport ou longitudinale (L) et qui peuvent être amenés en prise avec la palette (38) ou en être dégagés par un mouvement transversal à la direction de transport ou longitudinale (L).

2. Chariot de manutention selon la revendication 1 **caractérisé en ce que** les leveurs de palette (42) peuvent être amenés géométriquement en prise avec la palette (38).

3. Chariot de manutention selon la revendication 1 ou 2 **caractérisé en ce que** les bras de chargement (36, 37) sont mobiles horizontalement ou verticalement en biais par rapport à la direction de transport ou longitudinale (L).

4. Chariot de manutention selon l'une des revendications 1 à 3 **caractérisé en ce que** la partie de chargement (3) comprend une caisse de charge mobile verticalement qui porte les bras de chargement.

5. Chariot de manutention selon l'une des revendications 1 à 4 **caractérisé en ce que** les leveurs de palette (42) comprennent chacun un rouleau de contact (45), logé de manière à tourner, qui roule sur la palette lors d'un contact des leveurs de palette (42).

6. Chariot de manutention selon la revendication 5 **caractérisé en ce qu'**au moins la zone périphérique extérieure du rouleau de contact (45) est formée en un matériau élastique.

7. Chariot de manutention selon l'une des revendications 1 à 6 **caractérisé par** un dispositif d'amenée qui conduit entre les bras de chargement (36, 37) la palette (38) à lever pendant un trajet du chariot de manutention.

8. Chariot de manutention selon la revendication 7 **caractérisé en ce que** le dispositif d'amenée présente un canal de guidage (49) qui s'étend le long de la partie de chargement (3) et de la partie d'entraînement (2) du chariot de manutention et qui peut être ajusté à la dimension de la palette (38) à lever, ce qui permet de recueillir la palette (38) à lever pendant le trajet d'avancée et de recul du chariot de manutention et de la guider entre les bras de chargement (36, 37).

9. Chariot de manutention selon la revendication 8 **caractérisé en ce que** le canal de guidage (49) est limité par des rails de guidage (50, 51) situés sur le côté de la palette à lever ([38]) et dont la distance par rapport au côté avant ou arrière du chariot de manutention ([1]) augmente.

10. Chariot de manutention selon la revendication 9 **caractérisé en ce que** les rails de guidage (50, 51) sont à chaque fois munis d'une pluralité de rouleaux de guidage (57) disposés de façon espacée en direction de transport ou longitudinale (L) du chariot de manutention.

11. Chariot de manutention selon l'une des revendications 7 à 10 **caractérisé en ce que** l'installation d'amenée présente une installation de blocage (53) qui, d'une manière détachable dans une position de levée (AP) donnée, bloque la palette (38) guidée entre les bras de chargement (36, 37).

12. Chariot de manutention selon la revendication 11 **caractérisé en ce que** l'installation de blocage (53) est munie d'un détecteur de position de levée (54) qui détermine si la palette (38) a pris la position de levée (AP) prédéfinie et qui délivre un signal électrique correspondant.

13. Chariot de manutention selon la revendication 12 **caractérisé par** une installation de commande couplée au détecteur de position de levée (54), laquelle permet de manoeuvrer en fonction du signal électrique les bras de chargement (36, 37) et/ou les leveurs de palette (42) afin de lever la palette (38).

14. Chariot de manutention selon la revendication 13 **caractérisé en ce que** l'installation de commande manoeuvre automatiquement les bras de chargement (36, 37) et/ou les leveurs de palette (42) en fonction du signal électrique afin de lever la palette.

15. Chariot de manutention selon l'une des revendications 1 à 14 **caractérisé en ce que** les bras de chargement comprennent à chaque fois un cylindre (36, 37) logé de façon à tourner, sur lequel à chaque fois les leveurs de palette (42) sont appliqués, les deux cylindres (36, 37) pouvant tourner en sens contraire de manière synchrone.

16. Chariot de manutention selon la revendication 15 **caractérisé en ce que** les cylindres (36, 37) présentent à chaque fois une pluralité de leveurs de palette (42) régulièrement espacés dans leur direction périphérique.

17. Chariot de manutention selon la revendication 15 ou 16 **caractérisé en ce que** les leveurs de palette (42) sont articulés sous forme d'ailes sur le cylindre (36, 37) concerné de telle manière que sous l'effet d'une force de précontrainte ils prennent une position tangentielle dans laquelle ils s'étendent vers l'extérieur de façon pratiquement tangentielle au-delà de la périphérie extérieure du cylindre (36, 37) concerné et peuvent pivoter en s'opposant à la force de précontrainte dans une position périphérique où ils sont orientés pratiquement en direction périphérique du cylindre (36, 37) concerné.

18. Chariot de manutention selon l'une des revendications 1 à 17 **caractérisé par** une installation de levée (60) prévue au-dessus des bras de chargement, laquelle permet une levée guidée d'un grand nombre de palettes en direction verticale.

19. Chariot de manutention selon la revendication 18 **caractérisé en ce que** l'installation de levée (60) comprend une installation de blocage qui permet un blocage détachable à une hauteur donnée de la ou des palette(s) vide(s) levée(s) dans l'installation de levée.
